# EUROPÄISCHE PATENTSCHRIFT

(11) **EP 2 746 004 B1**
(45) Veröffentlichungstag und Bekanntmachung des Hinweises auf die Patenterteilung: **07.03.2018**
(21) Anmeldenummer: 13005944.7
(22) Anmeldetag: 19.12.2013
(51) Int. Cl.: B26D 5/00

(54) **Verfahren und Lebensmittelaufschneidevorrichtung mit Schneidkraftbestimmung**
Method and food cutting device with means for determining cutting force
Procédé et dispositif de découpe de produits alimentaires avec détermination de la force de coupe

(30) Priorität: 19.12.2012 DE 102012024947
(43) Veröffentlichungstag der Anmeldung: 25.06.2014
(73) Patentinhaber: Weber Maschinenbau GmbH Breidenbach, 35236 Breidenbach (DE)
(72) Erfinder: Kuhmichel, Christoph, 57319 Bad Berleburg (DE); Yokaribas, Volkan, 35236 Breidenbach (DE)
(74) Vertreter: Grünecker Patent- und Rechtsanwälte PartG mbB

(56) Entgegenhaltungen:
- EP-A1- 2 368 677
- EP-A1- 2 422 940
- WO-A1-2012/144048
- DE-A1- 4 336 955
- DE-A1-102004 040 427
- DE-U1-202009 005 394
- JP-A- H0 557 684

## Beschreibung

Die Erfindung betrifft ein Verfahren zum Betrieb einer Lebensmittelaufschneidevorrichtung, in der eine Sensoreinrichtung mit einem Sensor vorgesehen ist. Das Schneidmesser dient zum Aufschneiden eines auf einer Schneidauflage aufliegenden Lebensmittelproduktes.

Die DE 10 2009 011 860 offenbart eine Schneidvorrichtung mit einem Erfassungsmittel zur Erfassung von durch das rotierende Messer erzeugten Schwingungen. Das Erfassungsmittel arbeitet insbesondere mit einem Körperschallsensor, der im Bereich einer Schneidkante, beziehungsweise einer Trägerstruktur für diese Schneidkante angebracht ist. Körperschallaufnehmer können als Schwingungsgeschwindigkeitsaufnehmer oder als Schwingwegaufnehmer ausgebildet sein. Das Erfassen eines Körperschalls ist geeignet, um einen Schneidspalt einstellen zu können.

Diese Erfindung ist jedoch nicht auf die Einstellung eines Schneidspaltes gerichtet.

Die EP 2 422 940 A1 die als nächstliegender Stand der Technik angesehen wird, offenbart einen verstellbaren Sichelmesserkopf in einem Hochleistungsslicer zum Aufschneiden von Lebensmittelprodukten, wobei darin der Schneiddruck mittels Kraftaufnehmern in der Schneidkante ermittelt werden kann. In einem anderen technischen Gebiet offenbart die DE 20 2009 005 394 U1, dass Dehnungsmessstreifen als Sensoren zum Erfassen der Schnittkräfte beim Schneiden von Druckprodukten eingesetzt werden, wobei diese Dehnungsmessstreifen an einem Gestell montiert sind, das den Messerträger bildet.

Die vorliegende Erfindung hat die Aufgabe die Schneidqualität des Schneidmessers und den Schneidprozesses zu bewerten, um eine Optimierung zu erreichen.

Diese Aufgabe wird erfindungsgemäß durch ein Verfahren zum Betrieb einer Lebensmittelaufschneidevorrichtung gemäß Anspruch 1 und eine Lebensmittelaufschneidevorrichtung gemäß Anspruch 6 gelöst.

Die Sensoreinrichtung dient unter anderem zum Erkennen von Messerverschleiß. Wird ein Messer im Laufe seines Einsatzes stumpfer, so erhöht sich die Schneidkraft, die erfindungsgemäß von der Sensoreinrichtung ermittelt werden kann.

Darüber hinaus kann die Erfindung auch bei der Auswahl von verschiedenen Schneidmessern herangezogen werden. Je nach Art, Konsistenz und Inhalt eines Schneidgutes können verschiedene Schneidmesser zum Einsatz gelangen. Die erfindungsgemäße Sensoreinrichtung kann infolgedessen zum Ermitteln eines optimalen Schneidmessers herangezogen werden.

Das Gleiche gilt für die Bestimmung der optimalen Messerdrehzahl. Auch hier kann die erfindungsgemäße Sensoreinrichtung gute Dienste leisten.

Darüber hinaus kann die Erfindung dazu dienen, Prozessfehler beim Aufschneiden zu erkennen, beziehungsweise Abweichungen von Betriebsparametern zu ermitteln.

Die Qualität beim Aufschneiden insbesondere von Lebensmittelprodukten ist auch abhängig von Umweltparametern, nämlich insbesondere von der Temperatur des Lebensmittelproduktes, der Temperatur des Verarbeitungsraumes und der Feuchtigkeit sowohl des Produktes als auch des Verarbeitungsraumes. Auch diese Parameter können mit Hilfe der erfindungsgemäßen Sensoreinrichtung erfasst werden.

Zu guter Letzt ist es auch möglich, die Schneidqualität eines Schneidmessers über dessen Umfang zu bestimmen. Dabei können insbesondere örtlich begrenzte Unschärfen der Schneidkante eines Schneidmessers ermittelt werden.

Erfindungsgemäß ist es vorgesehen, dass aus der Bestimmung der Schneidkraft durch die Sensoreinrichtung die Messerschärfe des Schneidmessers identifiziert, insbesondere berechnet, beziehungsweise abgeleitet, wird. Bei einer weiteren vorteilhaften Ausgestaltung der Erfindung ist vorgesehen, dass aus der Bestimmung der Schneidkraft durch die Sensoreinrichtung die Schneidengeometrie des Schneidmessers identifiziert wird.

Günstig ist es, wenn der Verlauf der Schneidkraft über die Zeit in einer EDV-Anlage der Sensoreinrichtung abgelegt werden kann. Diese EDV-Anlage kann anschließend zur Auswertung herangezogen werden.

Mit Hilfe der Erfindung kann vorteilhafterweise auch eine verbleibende Standzeit des Schneidmessers in Abhängigkeit einer bestimmten Schneidkraft ermittelt werden. Dabei ist es auch denkbar in Abhängigkeit des Verlaufs der bestimmten Schneidkraft über die Zeit die verbleibende Standzeit des Schneidmessers zu bestimmen.

Die Sensoreinrichtung kann produktspezifische Daten bezüglich des Lebensmittelproduktes, und/oder der Temperatur/Feuchtigkeitsbedingungen des Schneidgutes. beziehungsweise des Verarbeitungsraumes, und/oder Parameter des Schneidmessers berücksichtigen.

In Abhängigkeit des Verlaufs der bestimmten Schneidkraft kann wenigstens ein Betriebsparameter der Aufschneidevorrichtung eingestellt werden. Dies gilt insbesondere für die Position des Messers und/oder der Schneidauflage aber auch für die Wahl der Schneidgeschwindigkeit und/oder der Vorschubgeschwindigkeit.

Vorteilhafterweise können anhand der von dem mindestens einen Sensor bestimmten Lastspitzen und/oder Lastverläufe über die Zeit rechnergestützt Lastkollektive ermittelt werden, die zur Ermittlung von Werten zu der Lebensdauer oder Wartungsintervallen von Verschleißteilen, insbesondere Lagerungen von Wellen oder Teilen des Antriebs, dienen. Ausgehend von den Lastspitzen und/oder Lastverläufen über die Zeit kann die Methode der linearen Schadensakkumulation angewandt werden, um Aussagen über die Lebensdauererwartung von belasteten Bauteilen zu erhalten.

Die lineare Schadensakkumulation berücksichtigt, dass ein Bauteil Im Normalfall nicht nur einer Schwingbelastung mit konstanten Amplituden unterliegt, d. h., einem rechteckigen Belastungskollektiv wie es zum Beispiel im Wöhlerversuch verwendet wird, sondern die Belastungsintensität in ihrer Höhe veränderlich ist. Zur Berechnung der Lebensdauer wird das Amplitudenkollektiv in einzelne Rechteckkollektive mit konstanter Amplitude S_a und einer Teilschwingspielzahl n_i unterteilt (getreppt). Nach dem Verfahren der linearen Schadensakkumulation wird nun für jedes Teilkollektiv eine Teilschädigung berechnet, indem die Teilschwingspielzahl durch die maximal ertragbare Schwingspielzahl N_i bei S_a einer Wöhlerlinie geteilt wird. Die Teilschädigungen aller Teilkollektive werden aufsummiert und ergeben die Gesamtschädigung D des Bauteils über D=SUMME(n_i/N_i). Überschreitet die Schädigung den Wert 1, so ist mit einem Bruch bzw. Anriss im Bauteil unter dem betrachteten Belastungskollektiv zu rechnen.

Insbesondere ist es nach der linearen Schadensakkumulation egal, auf welchem Lastniveau ein bestimmter Bruchteil der maximal ertragbaren Schwingspielzahl verbracht wurde. Die Schädigung eines Teilkollektivs i kann umgerechnet werden in die eines anderen Teilkollektivs j durch Division der jeweiligen Teilschwingspielzahlen n durch die maximal ertragbaren Schwingspielzahlen N (n_i/N_i=n_j/N_j).

Wenn man sich eine Zwei-Stufen-Belastung vorstellt, ist es nach der linearen Schadensakkumulation egal, in welcher Reihenfolge die Belastungen kommen. Reihenfolgeeffekte können also nicht erklärt werden.

Mit Hilfe dieses Verfahrens und einer entsprechenden Datenaufzeichnung kann nun von allen Maschinenkomponenten eine Lebensdauervorhersage getroffen werden. Damit ist man in der Lage präventiv auf die Anlagenverfügbarkeit der Lebensmittelaufschneidevorrichtung einzuwirken. Das bedeutet eine höhere Verfügbarkeit und eine höheren Wirkungsgrad der Lebensmittelaufsch neidevorrichtung.

Die Sensoreinrichtung kann beispielsweise an der Schneidauflage selbst oder deren Aufnahme vorgesehen sein. Weiterhin ist es denkbar sie am Messerkopf, beziehungsweise dessen Lageraufnahme anzuordnen. Auch ist es denkbar jeweils einen Sensor an der Schneidauflage, beziehungsweise deren Aufnahme und am Messerkopf, beziehungsweise dessen Lagerung vorzusehen und eine kombinierte Messung vorzunehmen.

In einer Ausführungsform können Sensoren an der Messerhalterung angeordnet werden. In einer weiteren Ausführungsform kann wenigstens ein Sensor zwischen der Messerhalterung und der Antriebswelle angeordnet sein.

Als Sensoren kommen Dehnungsmessstreifen oder Piezokristallelemente als Drucksensoren in Frage, ohne dass die Erfindung hierauf beschränkt wäre. So ist es auch denkbar andere Sensoren zu verwenden, zum Beispiel einen oder mehrere Beschleunigungssensoren, die so ausgelegt sind, dass aus dem gemessenen Beschleunigungswert unter Verwendung der bekannten Elastizitäten und Massen der Lebensmittelaufschneidevorrichtung die Kraft bestimmt wird, die vom Schneidmesser auf das Lebensmittelprodukt aufgebracht wird. Die Sensoreinrichtung ist ausgelegt, die Richtung der eingeleiteten Kraft in zwei linear unabhängigen Richtungen zu bestimmen, zum Beispiel in horizontaler und vertikaler Richtung.

Ein Ausführungsbeispiel der Erfindung wird nachfolgend anhand der Figuren erläutert. Es zeigen:

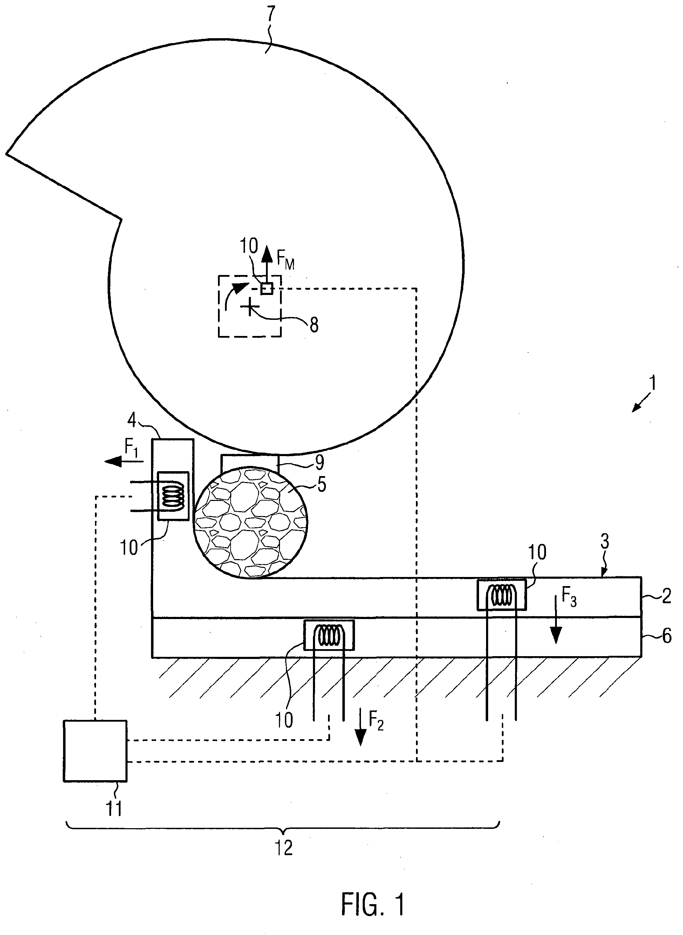

- Figur 1: schematisch eine Vorderansicht einer ersten Lebensmittelaufschneidevorrichtung,
- Figur 2: eine Vorderansicht auf eine andere Ausführungsform der Erfindung, bei der ein oder mehrere Sensoren zwischen Stützflächen und der Schneidauflage angeordnet sein können,
- Figur 3: eine Seitenansicht auf eine weitere Ausführungsform der Erfindung, bei der Sensoren im Bereich des Messerkopfes, z. B. zwischen Messer und Messerlagerung angeordnet sind, und
- Figur 4: eine Seitenansicht einer weiteren Ausführungsform, bei der Sensoren zwischen der Messerhalterung und einer Messerwelle angeordnet sein können.

Die Vorrichtung 1 umfasst im gezeigten Ausführungsbeispiel eine Schneidauflage 2 die eine horizontale Auflagefläche 3 und eine vertikale, seitliche Stütze 4 aufweist. Beide sind im rechten Winkel zueinander angeordnet und beispielsweise einstückig miteinander verbunden.

Ein Lebensmittelprodukt 5, hier eine Wurst mit kreisrundem Querschnitt, liegt auf der Auflagefläche 3 auf und berührt seitlich die Stütze 4, so dass die Wurst sich genau in der Ecke zwischen der Auflagefläche und der Stütze befindet. Dort kann die Verbindung zwischen der Auflagefläche und der Stütze abgerundet sein.

Unterhalb der Schneidauflage 2 befindet sich eine Schneidauflagenaufnahme 6, die als Halterung für die Schneidauflage dient. Sie kann stationär festgelegt sein.

Der Schneidauflage 2 ist ein Schneidmesser 7 zugeordnet, das um eine Achse 8 rotiert. Im gezeigten Fall ist das Schneidmesser ein Sichelmesser, dessen Schneidkante über den Umfang einen sich variierenden Abstand zur Schneidachse umfasst. Bei der Drehung des Schneidmessers dringt das Schneidmesser in das Schneidgut ein und überfährt mit der Schneidkante die gesamte Querschnittsfläche des Schneidguts, hier des Lebensmittelproduktes 5. Im gezeigten Fall dreht sich das Schneidmesser im Uhrzeigersinn.

Das Schneidmesser 7 wird mit seiner Achse 8 so positioniert, dass das auf der Schneidauflage befindliche Lebensmittelprodukt beim Schneidvorgang in die winkelige Anordnung der Schneidauflage gedrückt wird.

Um nacheinander Scheiben vom Lebensmittelprodukt abtrennen zu können, unterliegt das Produkt einem gewissen Vorschub, der zum Beispiel kontinuierlich während des Schneidens erfolgt. Dies kann dadurch geschehen, dass das Lebensmittelprodukt 5 auf der Schneidauflage von einem Vorschubelement 9 nach vorne befördert wird.

Das Schneidmesser ist mit seiner Schneidebene etwas vor der Schneidauflage 2 positioniert, so dass es beim Schneidvorgang an der Vorderseite der Schneidvorlage vorbeistreicht und eine Scheibe vom Lebensmittelprodukt 5 abtrennt.

In der Schneidauflage 2 können Sensoren 10 angeordnet sein, um die Schneidkraft des Schneidmessers zu bestimmen. Diese Sensoren können an geeigneten Stellen der Schneidauflage 2, beziehungsweise der Schneidauflageaufnahme 6 angeordnet sein, so zum Beispiel im Bereich der Stütze 4, der Auflagefläche 3 oder - wie bereits ausgeführt - an der Aufnahme 6 der Schneidauflage. Weiterhin ist es denkbar einen oder mehrere Sensoren dem Schneidmesser 7 selbst zuzuordnen, so zum Beispiel am Messerkopf, an der Achse 8 an der Antriebswelle des Schneidmessers oder an der Lagerung des Schneidmessers.

Diese Sensoren können einer EDV-Anlage 11 zugeordnet sein, die beispielsweise über einen Speicher und eine Auswerteeinheit verfügt.

Die erfindungsgemäße Sensoreinrichtung 12 kann einen oder mehrere der vorgenannten Sensoren 10 umfassen. Die Position und die Anzahl der Sensoren 10 richtet sich nach der gewünschten Qualität der Erfassung und der optimalen Platzierung dieser Sensoren.

Die Sensoreinrichtung dient zur Ermittlung der Schneidkraft, die während des Aufschneidens des Lebensmittelproduktes vom Schneidmesser 7 über das Lebensmittelprodukt 5 auf die Schneidauflage 2 aufgebracht wird. Durch die Ermittlung der Schneidkraft kann auf die Schärfe des Schneidmessers geschlossen werden. Dies geschieht durch Vergleich von Referenzdaten, die zum Beispiel durch empirische Versuche festgestellt worden sind. Ein eventueller Messerverschleiß, der auch nur über einen Teil des Messerumfanges vorliegen kann, kann hierdurch ermittelt werden.

Weiterhin kann die Ermittlung der Schneidkraft dazu dienen eine Auswahl unter verschiedenen Schneidmessern zu treffen und zwar in Hinblick auf das Schneidgut selbst. Dieses variiert üblicherweise vielfältig, je nach dem es sich um Fleisch, Wurst, Käse oder sonstiges Schnittgut handelt. Die Konsistenz und die innere Struktur des Schneidgutes ist gleichfalls bestimmend für die Qualität des Aufschnitts. Gleichfalls kann auch die optimale Messerdrehzahl ermittelt werden. Die EDV-Anlage der Sensoreinrichtung kann dafür verwendet werden, um den Verlauf der Schneidkraft über die Zeit darzustellen und daraus Rückschlüsse für die optimale Gestaltung des Messers, dessen Drehzahl, der verbleibenden Standzeit in Abhängigkeit von der bereits erfolgten Abnutzung usw. zu ermitteln.

Nachdem die EDV-Anlage die Möglichkeit eröffnet die Schneidleistung über die Zeit zu speichern und auszuwerten, können auch Prozessfehler während des Aufschneidens und Abweichungen von Betriebsparametern erfasst werden.

Weiterhin ist es möglich während des Aufschneidens die Einflüsse der Umweltbedingungen zu erfassen, so zum Beispiel die Feuchtigkeit, Temperatur und Elastizität des Schneidgutes sowie die Raumbedingungen des Verarbeitungsraumes.

Die während des Schneidvorganges durch die Sensoreinrichtung ermittelten Kräfte können auch während des Betriebes der Vorrichtung dazu dienen Betriebsparameter zu verändern, das heißt neu einzustellen. Dies betrifft insbesondere die Position des Schneidmessers bezüglich des Lebensmittelproduktes, beziehungsweise der Schneidauflage. Weiterhin betrifft es zum Beispiel die Position des Lebensmittelproduktes auf der Schneidauflage. Weiterhin kann dies die Schneidgeschwindigkeit des Schneidmessers, die Drehgeschwindigkeit desselben und den Vorschub betreffen.

In der Zeichnung sind beispielsweise die Kräfte F1, F2 und F_{M} dargestellt. F₁ stellt die horizontale Kraft, die von dem in der Stütze 4 befindlichen Sensor ermittelt wird. F₂ ermittelt beispielsweise die in der Aufnahme 6 sich ergebende vertikale Kraft F₂. Analoges gilt für den Sensor 10, der unterhalb der Auflagefläche 3 angeordnet ist. Er ermittelt auch vertikale Kräfte F₃.

Die Kraft F_{M} symbolisiert diejenige Kraft, die von dem Messerkopf während des Schneidbetriebes ermittelt wird. Sie stellt eine Gegenkraft zu der auf die der Schneidauflage wirkende Kraft dar.

Als Sensoren können beispielsweise Dehnungsmessstreifen dienen. Auch Beschleunigungssensoren sind denkbar, die aus dem gemessenen Beschleunigungswert, unter Verwendung der bekannten Elastizitäten und Massen der Lebensmittelaufschneidevorrichtung die Kraft bestimmen, die von dem Schneidmesser 7 auf das Lebensmittelprodukt 5 aufgebracht wird.

Darüber hinaus sind Druck- oder Kraftsensoren denkbar, die die erfassten Signale in elektrische Werte umwandeln und weiterleiten.

Diese Sensoren können die physikalischen kapazitiven oder piezo-elektrischen Effekte nutzen.

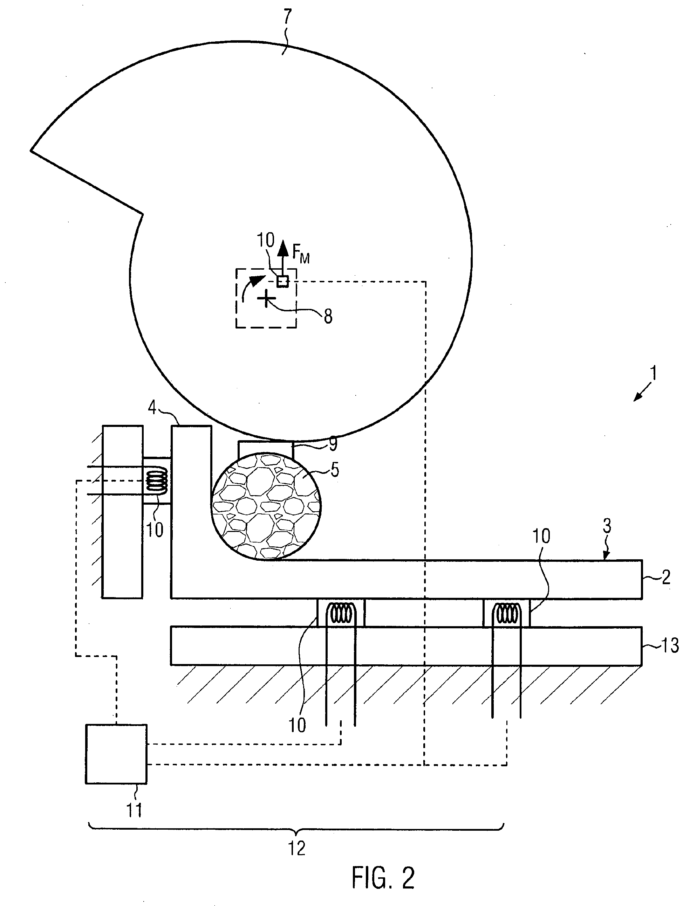

Bei der Ausführungsform von Figur 2 sind Sensoren, z.B. Kraft- oder Drucksensoren zwischen der Schneidauflage 2 und Abstützflächen 13 anordbar. Diese können der Schneidauflage zugeordnet sein und z.B. horizontal oder auch vertikal ausgerichtet sein.

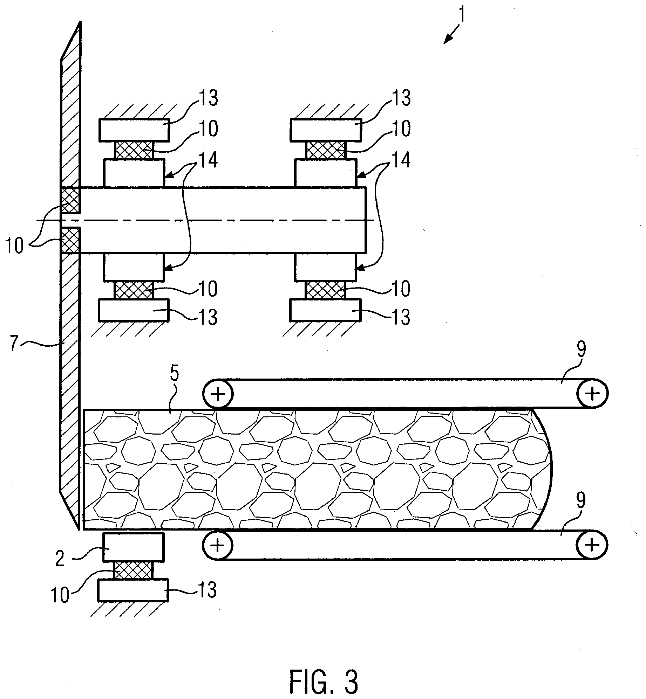

Bei der Ausführungsform von Figur 3 befindet sich das Lebensmittelprodukt 5 zwischen zwei Förderbänder, die zusammen das Vorschubelement 9 bilden. Diesem Element vorgelagert ist die Schneidauflage 2. Zwischen ihr und einer Stützfläche 13 ist ein Sensor 10 angeordnet, der z.B. die vertikalen Kräfte erfasst.

Alternativ, beziehungsweise kumulativ ist es auch möglich, wenigstens einen Sensor in der Messeraufnahme selbst anzuordnen, wie dies aus der Teilschnittansicht des Messers ersichtlich ist. Die Sensoren können beispielsweise am vorderen, dem Schneidmesser zugeordneten Ende der Achse 8 angeordnet sein.

Weiterhin ist denkbar, sie innerhalb der Lageranordnung 14 unterzubringen.

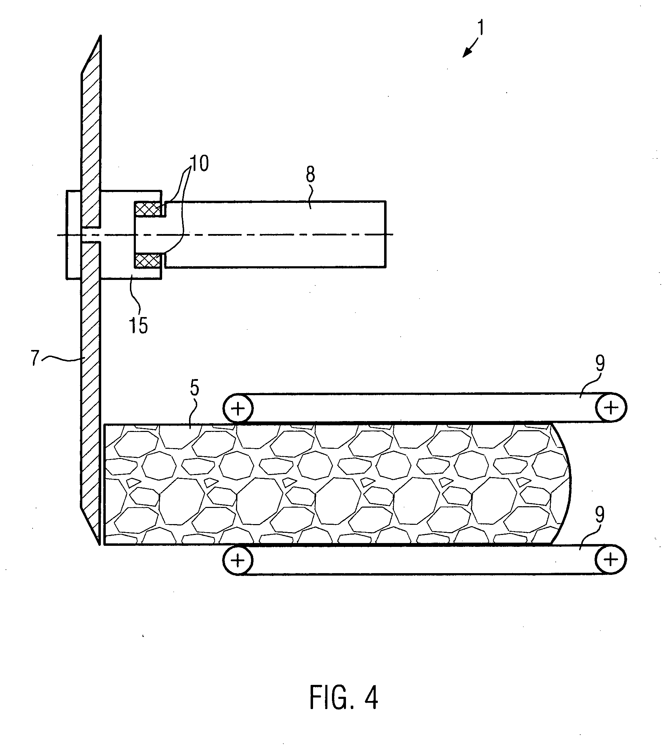

Die Figur 4 zeigt eine ähnliche Lösung. Das Schneidmesser 7 verfügt über eine Messerhalterung 15. Zwischen letzterer und der Messerwelle 8 können gleichfalls Sensoren 10 angeordnet sein.

## Patentansprüche

1. Verfahren zum Betrieb einer Lebensmittelaufschneidevorrichtung, in der eine Sensoreinrichtung mit mindestens einem Sensor vorgesehen ist,
wobei mit einem Schneidmesser ein auf einer Schneidauflage aufliegendes Lebensmittelprodukt aufgeschnitten wird,
wobei mittels der Sensoreinrichtung eine Schneidkraft bestimmt wird, die von dem Schneidmesser über das Lebensmittelprodukt insbesondere auf die Schneidauflage aufgebracht wird,
**dadurch gekennzeichnet, dass**
die Sensoreinrichtung (12) die Richtung der eingeleiteten Kraft (F₁, F₂, F₃, F_{M}) in zwei linear unabhängigen Richtungen bestimmen kann, und
dass aus der Bestimmung der Schneidkraft durch die Sensoreinrichtung die Messerschärfe des Schneidmessers identifiziert wird.

2. Verfahren nach Anspruch 1, wobei in Abhängigkeit des Verlaufs der bestimmten Schneidkraft über die Zeit die verbleibende Standzeit des Schneidmessers ermittelt wird.

3. Verfahren nach einem der vorangehenden Ansprüche, wobei die Sensoreinrichtung produktspezifische Daten bezüglich des Lebensmittelprodukts und/oder Parameter des Schneidmessers berücksichtigt.

4. Verfahren nach einem der vorangehenden Ansprüche, wobei in Abhängigkeit des Verlaufs der bestimmten Schneidkraft wenigstens ein Betriebsparameter der Lebensmittelaufschneidevorrichtung eingestellt wird, insbesondere die Position des Schneidmessers, und/oder die Position der Schneidauflage, und/oder die Schneidgeschwindigkeit des Schneidmessers und/oder die Vorschubgeschwindigkeit für das Lebensmittelprodukt.

5. Verfahren nach einem der vorangegangenen Ansprüche, wobei anhand der von dem mindestens einen Sensor bestimmten Lastspitzen und Lastverläufe über die Zeit rechnergestützt Lastkollektive ermittelt werden, die zur Ermittlung von Werten zu der Lebensdauer oder Wartungsintervallen von Verschleißteilen, insbesondere Lagerungen von Wellen oder Teilen des Antriebs, dienen.

6. Lebensmittelaufschneidevorrichtung für ein Lebensmittelprodukt, mit einer Schneidauflage zur Aufnahme desselben und einem rotierenden Schneidmesser zum Aufschneiden des Lebensmittelprodukts, und
einer Sensoreinrichtung (12), mit der eine Kraft (F₁, F₂, F₃, F_{M}), die von dem Schneidmesser (7) über das Lebensmittelprodukt (5) auf die Schneidauflage (2) aufgebracht wird, bestimmbar ist,
**dadurch gekennzeichnet, dass**
die Sensoreinrichtung (12) die Richtung der eingeleiteten Kraft (F₁, F₂, F₃, F_{M}) in zwei linear unabhängigen Richtungen bestimmen kann, und
dass aus der Bestimmung der Schneidkraft durch die Sensoreinrichtung die Messerschärfe des Schneidmessers identifiziert wird.

7. Lebensmittelaufschneidevorrichtung nach Anspruch 6, wobei mindestens ein Sensor (10) der Sensoreinrichtung (12) an der Schneidauflage (2) vorgesehen ist.

8. Lebensmittelaufschneidevorrichtung nach Anspruch 6 oder 7, wobei ein Sensor (10) der Sensoreinrichtung (12) an der Schneidauflagenaufnahme (6) vorgesehen ist.

9. Lebensmittelaufschneidevorrichtung nach einem der Ansprüche 6 bis 8, wobei das Schneidmesser (7) an einem Messerkopf gelagert ist, und ein Sensor (10) der Sensoreinrichtung (12) am Messerkopf vorgesehen ist.

10. Lebensmittelaufschneidevorrichtung nach einem der Ansprüche 6 bis 9, wobei der Sensor (10) wenigstens einen Dehnungsmessstreifen umfasst.

11. Lebensmittelaufschneidevorrichtung nach einem der vorangehenden Ansprüche 6 bis 10, wobei wenigstens ein Sensor zwischen der Schneidauflage (2) und wenigstens einer ihr zugeordneten Stützfläche (3) angeordnet ist.

## Claims

1. Method for operating a food slicing device in which a sensor device with at least one sensor is provided,
wherein a food product resting on a cutting bed is sliced with a cutting blade,
wherein a cutting force being applied by said cutting blade via said food product, in particular onto said cutting bed, is determined using said sensor device,
**characterized in that**
said sensor device (12) can determine the direction of said force exerted (F₁, F₂, F₃, F_{M}) in two linearly independent directions, and
the blade sharpness of said cutting blade is identified from said determination of said cutting force by said sensor device.

2. Method according to claim 1, where said remaining service life of said cutting blade is determined in dependency of the curve of said determined cutting force over time.

3. Method according to one of the preceding claims, where said sensor device takes into account product-specific data regarding said food product and/or parameters of said cutting blade.

4. Method according to one of the preceding claims, where said at least one operating parameter of said food slicing device is set in dependency of said curve of said determined cutting force, in particular the position of said cutting blade and/or the position of said cutting bed and/or the cutting speed of said cutting blade and/or the feed rate for said food product.

5. Method according to one of the preceding claims, where load spectrums are determined in a computer-aided manner using peak loads and/or load profiles over time being determined by said at least one sensor, which are used to determine values regarding the life span or maintenance intervals of wear and tear parts, in particular of bearings of shafts or parts of the drive.

6. Food slicing device for a food product comprising
a cutting bed for receiving same and a rotating cutting blade for slicing said food product, and
a sensor device (12) with which a force (F₁, F₂, F₃, F_{M}) is determinable that is applied by said cutting blade (7) via said food product (5) onto said cutting bed (2),
**characterized in that**
said sensor device (12) can determine the direction of said force exerted (F₁, F₂, F₃, F_{M}) in two linearly independent directions, and
the blade sharpness of said cutting blade is identified from said determination of said cutting force by said sensor device.

7. Food slicing device according to claim 6, where at least one sensor (10) of said sensor device (12) is provided at said cutting bed (2).

8. Food slicing device according to claim 6 or 7, where said sensor (10) of said sensor device (12) is provided at said cutting bed support (6).

9. Food slicing device according to one of the claims 6 to 8, where said cutting blade (7) is mounted at a blade head and a sensor (10) of said sensor device (12) is provided at said blade head.

10. Food slicing device according to one of the claims 6 to 9, where said sensor (10) comprises at least one strain gauge.

11. Food slicing device according to one of the preceding claims 6 to 10, wherein at least one sensor is arranged between said cutting bed (2) and at least one associated bearing surface (3).

## Revendications

1. Procédé pour assurer le fonctionnement d'un dispositif de découpe de produits alimentaires dans lequel est prévu un dispositif à capteurs avec au moins un capteur, procédé
d'après lequel un produit alimentaire reposant sur un appui de coupe est découpé à l'aide d'une lame de coupe, et
d'après lequel on détermine, au moyen du dispositif à capteurs, une force de coupe, qui est appliquée par la lame de coupe, par l'intermédiaire du produit alimentaire, notamment sur l'appui de coupe, **caractérisé**
**en ce que** le dispositif à capteurs (12) est en mesure de déterminer la direction de la force appliquée (F₁, F₂, F₃, F_{M}) dans deux directions linéairement indépendantes, et
**en ce qu'**à partir de la détermination de la force de coupe par le dispositif à capteurs, on identifie l'état du tranchant de la lame de coupe.

2. Procédé selon la revendication 1, d'après lequel on détermine la durée de vie restante de la lame de coupe, en fonction de l'évolution de la force de coupe dans le temps.

3. Procédé selon l'une des revendications précédentes, d'après lequel le dispositif à capteurs prend en considération des données spécifiques au produit concernant ledit produit alimentaire et/ou des paramètres de la lame de coupe.

4. Procédé selon l'une des revendications précédentes, d'après lequel en fonction de l'évolution de ladite force de coupe déterminée, on procède au réglage d'au moins un paramètre de fonctionnement du dispositif de découpe de produits alimentaires, notamment la position de la lame de coupe, et/ou la position de l'appui de coupe, et/ou la vitesse de coupe de la lame de coupe et/ou la vitesse d'avance pour le produit alimentaire.

5. Procédé selon l'une des revendications précédentes, d'après lequel à l'aide des pointes de charge et des évolutions de la charge dans le temps déterminées par ledit au moins un capteur, on détermine au moyen d'un calculateur, des collectifs de charge, qui servent à la détermination de valeurs concernant la durée de vie ou des intervalles d'entretien de pièces d'usure, notamment de paliers d'arbres ou de parties de l'entraînement.

6. Dispositif de découpe de produits alimentaires destiné à un produit alimentaire, et comportant un appui de coupe destiné à accueillir ce produit et une lame de coupe rotative pour assurer la découpe du produit alimentaire, et
un dispositif à capteurs (12) à l'aide duquel il est possible de déterminer une force (F₁, F₂, F₃, F_{M}), qui est appliquée par la lame de coupe (7) sur l'appui de coupe (2) par l'intermédiaire du produit alimentaire (5),
**caractérisé**
**en ce que** le dispositif à capteurs (12) est en mesure de déterminer la direction de la force appliquée (F₁, F₂, F₃, Fₘ) dans deux directions linéairement indépendantes, et
**en ce qu'**à partir de la détermination de la force de coupe par le dispositif à capteurs, on identifie l'état du tranchant de la lame de coupe.

7. Dispositif de découpe de produits alimentaires selon la revendication 6, dans lequel au moins un capteur (10) du dispositif à capteurs (12) est prévu au niveau de l'appui de coupe (2).

8. Dispositif de découpe de produits alimentaires selon la revendication 6 ou la revendication 7, dans lequel un capteur (10) du dispositif à capteurs (12) est prévu au niveau du support (6) de l'appui de coupe.

9. Dispositif de découpe de produits alimentaires selon l'une des revendications 6 à 8, dans lequel la lame de coupe (7) est montée sur une tête de coupe, et un capteur (10) du dispositif à capteurs (12) est prévu au niveau de la tête de coupe.

10. Dispositif de découpe de produits alimentaires selon l'une des revendications 6 à 9, dans lequel le capteur (10) comprend au moins une jauge de contraintes.

11. Dispositif de découpe de produits alimentaires selon l'une des revendications 6 à 10, dans lequel au moins un capteur est agencé entre l'appui de coupe (2) et au moins une surface d'appui (3), qui lui est associée.
